Europäisches Patentamt

European Patent Office

Office européen des brevets

(11) Veröffentlichungsnummer: **0 472 924 A2**

# EUROPÄISCHE PATENTANMELDUNG

(21) Anmeldenummer: **91112615.9**

(22) Anmeldetag: **26.07.91**

(51) Int. Cl.5: **B29C 47/10**, B29C 31/02

(30) Priorität: **29.08.90 DE 4027319**

(43) Veröffentlichungstag der Anmeldung:
**04.03.92 Patentblatt 92/10**

(84) Benannte Vertragsstaaten:
**DE FR GB IT**

(71) Anmelder: **Windmöller & Hölscher**
**Münsterstrasse 50**
**W-4540 Lengerich(DE)**

(72) Erfinder: **Saatkamp, Richard, Dipl.-Ing.**
**Wechter Mark 60**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) **Verfahren und Vorrichtung zum Zuführen von rieselfähigem Gut in eine Einlauföffnung einer Verarbeitungsmaschine.**

(57) Die Erfindung betrifft ein Verfahren zum Zuführen von rieselfähigem Gut, vorzugsweise Granulat, in eine Einlauföffnung eines Kunststoffextruders mit einem Speicherbehälter, der mit einer Fördereinrichtung zu seiner Befüllung und mit einer bodenseitigen verschließbaren Auslauföffnung versehen ist, und mit einem auf eine Wiegeeinrichtung abgestützten oder mit einer Füllstandsmeßeinrichtung versehenen Zwischenspeicherbehälter, der entsprechend seinem Füllgewicht oder Füllstand mit Gut gefüllt wird und bodenseitig einen in die Einlauföffnung mündenden Auslauf aufweist. Zur Lösung der Aufgabe, ein derartiges Verfahren so weiterzuentwickeln, daß bei einfacherer Steuerung eine Speicherbehälteranordnung von geringerer Bauhöhe verwendet werden kann, wird der Speicherbehälter in Abhängigkeit von dem Füllgrad des Zwischenspeicherbehälters in diesen durch Öffnen seiner Auslauföffnung ganz oder teilweise entleert und nach Verschließen der Auslauföffnung wieder mit vorher bestimmbarem Füllgrad mit Gut gefüllt.

EP 0 472 924 A2

Die Erfindung betrifft ein Verfahren zum Zuführen von rieselfähigem Gut, vorzugsweise Granulat, in eine Einlauföffnung einer Verarbeitungsmaschine, vorzugsweise eines Kunststoffextruders, mit einem Speicherbehälter, der mit einer Fördereinrichtung zu seiner Befüllung und mit einer bodenseitigen verschließbaren Auslauföffnung versehen ist, und mit einem auf einer Wiegeeinrichtung abgestützten oder mit einer Füllstandsmeßeinrichtung versehenen Zwischenspeicherbehälter, der entsprechend seinem Füllgewicht oder Füllstand mit Gut gefüllt wird und bodenseitig einen in die Einlauföffnung mündenden Auslauf aufweist.

Das ordnungsgemäße und störungsfreie Funktionieren von rieselfähiges Gut verarbeitenden Maschinen hängt häufig davon ab, daß diesen das Gut gleichmäßig, d.h. mit im wesentlichen gleichem Druck, zugeführt wird. Ein Kunststoffextruder arbeitet grundsätzlich nur dann zufriedenstellend, wenn diesem das Kunststoffgranulat und ggf. diesem zugemischte Materialien mit gleichbleibender Menge zugeführt werden. Dies kann beispielsweise dadurch gewährleistet werden, daß in dem Aufgabetrichter oder einem diesen entsprechenden oder ersetzenden Zwischenspeicherbehälter ständig eine ausreichende Gutmenge aufrechterhalten wird, die einen kontinuierlichen Einzug des Gutes in den Extruder sicherstellt.

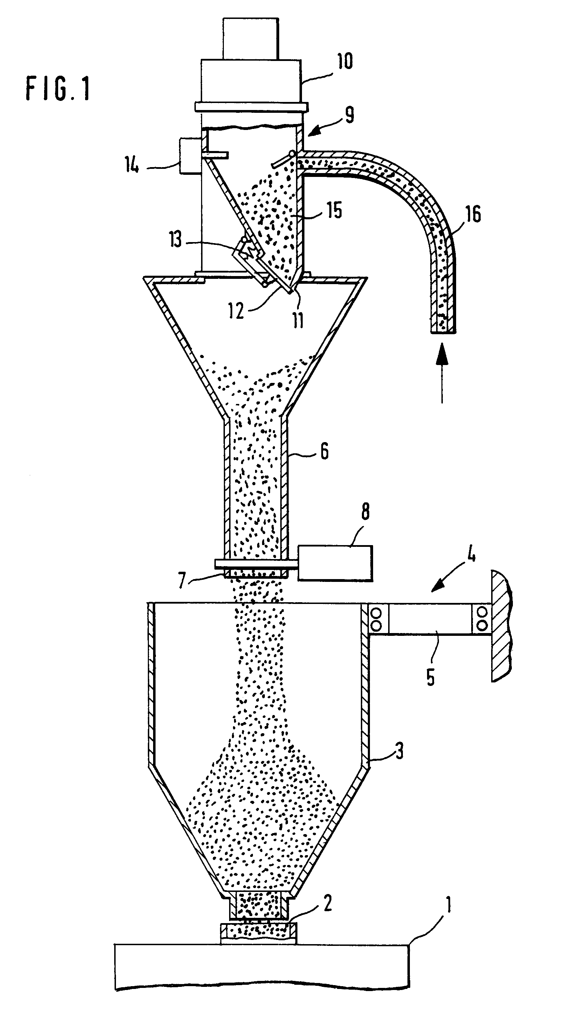

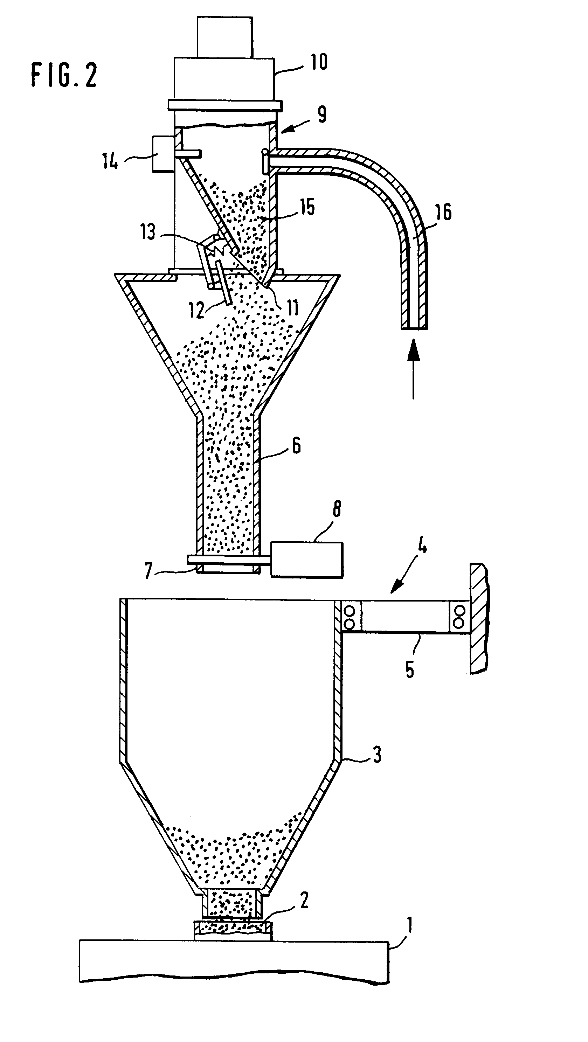

Anhand der Fig. 1 und 2 der Zeichnung wird nun ein bekanntes Verfahren sowie eine bekannte Vorrichtung beschrieben, mit der einem Kunststoffextruder in der Weise Granulat oder anderes rieselfähiges Material zugeführt werden kann, daß dieses gleichmäßig eingezogen wird. Über der Einlauföffnung 2 eines nur schematisch dargestellten Teils eines Extruders 1 hängt ein als Dosierwaage ausgebildeter Zwischenspeicherbehälter 3. Dieser Zwischenspeicherbehälter 3 wird von einem Tragarm 4 getragen, der in der dargestellten Weise mit dem Maschinengestell verbunden ist und einen Dehnungsmeßstreifen 5 aufweist. Oberhalb des als Dosierwaage ausgebildeten Zwischenspeicherbehälters 3 ist ein weiterer trichterförmiger Zwischenspeicherbehälter 6 angeordnet, dessen unterer Auslauf 7 mit einem Schieberverschluß 8 versehen ist, durch der der Auslauf 7 geschlossen und geöffnet werden kann. Auf dem Deckel dieses weiteren Zwischenspeicherbehälters 6 ist ein Speicherbehälter 9 aufgesetzt, dessen Deckel ein Sauggebläse 10 trägt. Der trichterförmige Auslauf 11 dieses Speicherbehälters 9 ist durch eine schwenkbar gelagerte Klappe 12 verschließbar, die mit einer Zugfeder 13 versehen ist, die diese in Schließrichtung beaufschlagt. Der Speicherbehälter 9 ist in seinem oberen Bereich mit einem Füllstandsmesser 14 versehen, der die obere Füllgrenze für das angesaugte Granulat in dem Speicherbehälter 9 ertastet. Das Granulat 15 wird dem Speicherbehälter 9 über ein Saugrohr 16 zugeführt.

In Fig. 1 ist der Zustand dargestellt, in dem das Sauggebläse 10 eingeschaltet und die Klappe 12 geschlossen ist, so daß im Speicherbehälter 9 über das Saugrohr 16 Granulat zugeführt wird, und zwar bis zu einer durch den Füllstandsmesser 14 vorgegebenen Füllstandshöhe. Hat das Granulat den Füllstandsmesser 14 erreicht, wird das Sauggebläse 10 durch ein von dem Füllstandsmesser betätigten Schalter abgeschaltet.

Ist der Speicherbehälter 9 bis zu der durch den Füllstandsmesser 14 vorgegebenen Höhe mit Granulat gefüllt worden und wird sodann das Sauggebläse abgeschaltet, wird die Klappe 12 durch das Gewicht des in dem Speicherbehälter 9 gespeicherten Granulats aufgedrückt, da die Schließfeder 13 nur etwa so stark ausgelegt ist, daß sie die Klappe zu schließen vermag, wenn auf dieser kein oder aber nur ein geringer Fülldruck wirkt. Während des Befüllens des Speicherbehälters 9 wird die Klappe 12 infolge des in dem Speicherbehälter vorhandenen Unterdrucks in ihrer Schließstellung gehalten.

Während des Befüllens des Speicherbehälters 9 mit Granulat kann der Schieber 8 in Abhängigkeit von dem von der Dosierwaage erfaßten Füllgewicht aufgezogen werden, so daß das Granulat aus dem weiteren Zwischenspeicherbehälter 6 in den Zwischenspeicherbehälter 3 fließt. Der Schieber 8 wird wieder geschlossen, sobald die Dosierwaage eine ausreichende Füllmenge in dem Zwischenspeicher 3 erfaßt hat. Der Befehl zum Aufziehen des Schiebers 8 erfolgt über ein von dem Dehnungsmeßstreifen 5 abgeleiteten Signal.

In Fig. 2 ist der Zustand dargestellt, in dem das Sauggebläse 10 nach Erreichen der von dem Füllstandsmesser 14 erfaßten Füllhöhe abgeschaltet worden ist und sich der Speicherbehälter 9 dadurch in den oberen Zwischenspeicherbehälter 6 entleert, daß die Klappe 12 unter dem Gewicht der Füllmenge aufgedrückt wird. Ist der obere Zwischenspeicherbehälter 6 jedoch in der aus Fig. 2 ersichtlichen Weise gefüllt, kann sich die Klappe 12 nicht mehr schließen, weil sie durch das sich in dem oberen Zwischenbehälter stauende Gut blockiert wird. Die Schließfeder 13 vermag die Klappe 12 erst dann wieder in ihre Verschlußstellung zu bewegen, wenn sich der obere Zwischenbehälter 6 soweit nach Aufziehen des Schiebers 8 in den unteren Zwischenbehälter 3 entleert hat, daß die Klappe 12 nicht mehr von dem sich stauenden Gut blockiert ist.

Bei der bekannten anhand der Fig. 1 und 2 beschriebenen Vorrichtung wird das Sauggebläse 10 immer dann eingeschaltet, wenn die Klappe 12 geschlossen ist. Die Füllung des Speicherbehälters 9 wird sodann durch Abschalten des Sauggebläses 10 beendet, wenn der Füllstand das Niveau des Füllstandsmessers 14 erreicht hat. Unabhängig von der Steuerung der Füllung des Speicherbehälters 9 wird die Öffnungs- und Schließbewegung des Schiebers 8 durch die Dosierwaage bzw. den Dehnungsmeßstreifen 5 in der Weise gesteuert, daß der Schieber 8 geöffnet wird, wenn ein unterer Füllstand erreicht ist, und wieder geschlossen wird, wenn ein oberer Füllstand aufgrund des entsprechenden Gewichts erfaßt wird.

Die anhand der Fig. 1 und 2 beschriebene Vorrichtung weist aufgrund der drei übereinander angeordneten Behälter nicht nur eine erhebliche Bauhöhe auf, sie ist auch aufgrund der beiden unabhängig voneinander arbeitenden Steuereinrichtungen zur Füllung und Entleerung der drei Behälter technisch relativ aufwendig.

Aufgabe der Erfindung ist es daher, ein Verfahren und eine Vorrichtung vorzuschlagen, die bei einfacherer Steuerung eine Speicherbehälteranordnung von geringerer Bauhöhe ermöglicht.

Erfindungsgemäß wird diese Aufgabe bei einem Verfahren der eingangs angegebenen Art dadurch gelöst, daß der Speicherbehälter in Abhängigkeit von dem Füllgrad des Zwischenspeicherbehälters in diesen durch Öffnen seiner Auslauföffnung ganz oder teilweise entleert und nach Verschließen der Auslauföffnung wieder mit vorherbestimmbaren Füllgrad mit Granulat gefüllt wird. Das erfindungsgemäße Verfahren ermöglicht eine gleichmäßige Zuführung von Gut zu einer Verarbeitungsmaschine mit nur einem Speicherbehälter und einem Zwischenbehälter, wobei die Verschlußeinrichtung des Speicherbehälters und die diesen befüllende Fördereinrichtung nur in Abhängigkeit von dem Füllgewicht oder dem Füllgrad des Zwischenspeicherbehälters gesteuert werden. Die nach dem erfindungsgemäßen Verfahren arbeitende Vorrichtung besteht somit nur aus zwei Behältern und einer Steuereinrichtung, die das Befüllen sowie das Öffnen zum Zwecke des Entleerens und das Verschließen des oberen Speicherbehälters steuert.

Eine Vorrichtung zur Durchführung des erfindungsgemäßen Verfahrens zeichnet sich erfindungsgemäß dadurch aus, daß die Verschlußeinrichtung der Auslauföffnung mit einer Schalteinrichtung versehen ist, die die Fördereinrichtung bei oder nach dem Verschließen der Auslauföffnung einschaltet, und daß die Wiege- oder Füllstandsmeßeinrichtung nach Erreichen des vorgesehenen Füllgrades ein Signal erzeugt, das die Fördereinrichtung abschaltet.

Die den Speicherbehälter mit Gut füllende Fördereinrichtung kann eine Saugfördereinrichtung sein.

Zweckmäßigerweise mündet in den oberen Bereich des Speicherbehälters ein Förderrohr, wobei der Speicherbehälter durch einen mit einem Sauglüfter versehenen Deckel verschlossen ist.

Der Zwischenspeicherbehälter kann von einem mit dem Maschinengestell verbundenen Tragarm gehalten sein, der zur Ermittlung des Füllgewichts mit mindestens einem Dehnungsmeßstreifen versehen ist. Der Zwischenbehälter hat somit die Funktion einer Dosierwaage, wobei entsprechend dem Füllgewicht durch von der Dosierwaage erzeugte Signale die Verschlußeinrichtung des Speicherbehälters geöffnet und geschlossen wird.

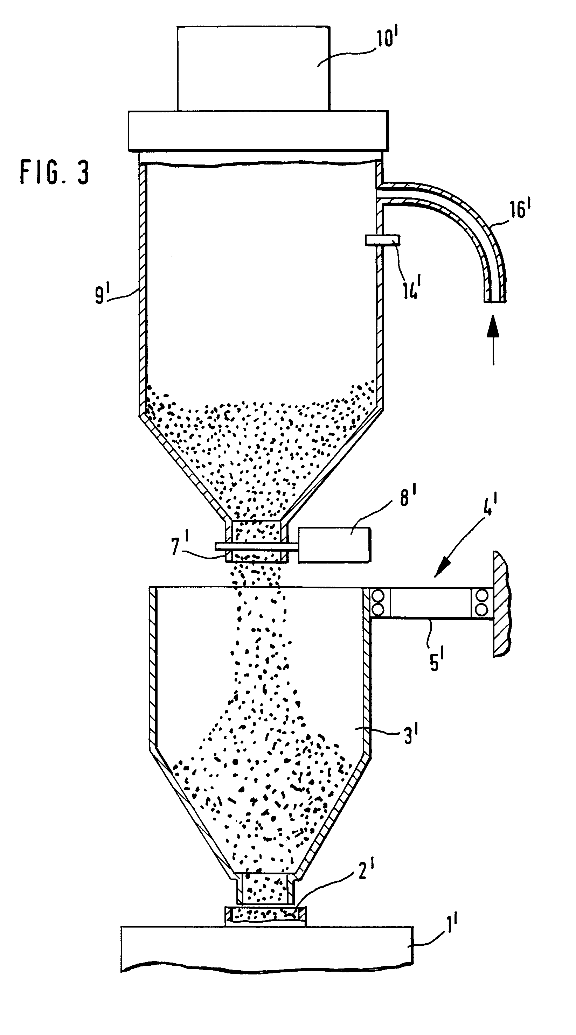

Ein Ausführungsbeispiel der Erfindung wird nachstehend anhand der Fig. 3 der Zeichnung näher beschrieben.

Der Aufbau und die Halterung des Zwischenbehälters 3' entspricht der Ausgestaltung und der Halterung des unteren Zwischenbehälters 3 nach den Fig. 1 und 2. Der Zwischenbehälter 3' ist in seinem unteren Bereich trichterförmig ausgestaltet und mit einem Auslauf versehen, der in die Einlauföffnung 2' des Extruders 1' mündet. Der Zwischenbehälter 3' ist durch einen Tragarm 4', der mit mindestens einem Dehnungsmeßstreifen 5' versehen ist, mit dem Maschinengestell verbunden, so daß er die Funktion einer Dosierwaage hat.

Oberhalb des Zwischenbehälters 3' ist ein Speicherbehälter 9' angeordnet, dessen unterer Auslauf 7' durch einen Schieber 8' geschlossen werden kann. In den oberen Bereich des Speicherbehälters 9' mündet ein als Saugrohr 16' ausgebildetes Förderrohr. Der Deckel des Speicherbehälters 9' ist mit einem Sauggebläse 10' versehen, durch dessen Betätigung über das Saugrohr 16' Granulat angesaugt werden kann. Der Speicherbehälter 9' ist mit einem Füllstandsmesser 14' versehen, der die maximal zulässige Füllstandshöhe in dem Speicherbehälter 9' erfaßt.

In dem in Fig. 3 dargestellten Betriebszustand ist der Schieber 8' geöffnet, so daß Granulat in den eine Dosierwaage bildenden Zwischenbehälter 3' fließen kann. Durch das Öffnen des Schiebers 8' wird gleichzeitig ein Signal erzeugt, welches verhindert, daß das Sauggebläse 10' eingeschaltet werden kann. Der Schieber 8' wird geschlossen, sobald ein von dem Dehnungsmeßstreifen 5' abgeleitetes Signal anzeigt, das in dem Zwischenspeicherbehälter 3' genügend Gut vorhanden ist. Mit dem Schließen des Schiebers 8' wird unmittelbar ein Signal erzeugt, das das Sauggebläse 10' einschaltet. Das Sauggebläse 10' bleibt sodann solange eingeschaltet, bis durch das Saugrohr 16' soviel Granulat in den Zwischenspeicherbehälter 9' angesaugt worden ist, daß der Füllstandsmesser 14' von dem steigenden Füllstand betätigt wird. Sobald der Füllstandsmesser 14' den oberen Füllstand in dem Behälter 9' erfaßt hat, wird das Sauggebläse 10' abgeschaltet. Entleerung und Füllung des Zwischenspeicherbehälters 3' und des Speicherbehälters 9' erfolgt während des Betriebes in der beschriebenen Weise.

Eine weitere erfinderische Ausführungsform ist Gegenstand des Nebenanspruches 6.

Gegenüber der anhand der Fig. 1 und 2 beschriebenen Vorrichtung weist die erfindungsgemäße Vorrichtung den Vorteil auf, daß die gesamte Bauhöhe der Füllvorrichtung um etwa 1/3 verringert werden kann und daß die Steuerung der Vorrichtung wesentlich vereinfacht ist.

**Patentansprüche**

1. Verfahren zum Zuführen von rieselfähigem Gut, vorzugsweise Granulat, in eine Einlauföffnung einer Bearbeitungsmaschine, vorzugsweise eines Kunststoffextruders,

   mit einem Speicherbehälter, der mit einer Fördereinrichtung zu seiner Befüllung und mit einer bodenseitigen verschließbaren Auslauföffnung versehen ist, und

   mit einem auf eine Wiegeeinrichtung abgestützten oder mit einer Füllstandsmeßeinrichtung versehenen Zwischenspeicherbehälter, der entsprechend seinem Füllgewicht oder Füllstand mit Gut gefüllt wird und bodenseitig einen in die Einlauföffnung mündenden Auslauf aufweist,

   **dadurch gekennzeichnet**,

   daß der Speicherbehälter in Abhängigkeit von dem Füllgrad des Zwischenspeicherbehälters in diesen durch Öffnen seiner Auslauföffnung ganz oder teilweise entleert und nach Verschließen der Auslauföffnung wieder mit vorherbestimmbaren Füllgrad mit Gut gefüllt wird.

2. Vorrichtung zur Durchführung des Verfahrens nach Anspruch 1, dadurch gekennzeichnet, daS die Verschlußeinrichtung (8') der Auslauföffnung (7') des Speicherbehälters (9') mit einer Schalteinrichtung versehen ist, die die Fördereinrichtung (10',16') bei oder nach dem Verschließen der Auslauföffnung (7') einschaltet, und daß die Wiege- oder Füllstandsmeßeinrichtung (5') nach Erreichen des vorhergesehenen Füllgrades ein Signal erzeugt, das die Fördereinrichtung abschaltet.

3. Vorrichtung nach Anspruch 2, dadurch gekennzeichnet, daß die Fördereinrichtung eine Saugfördereinrichtung (10',16') ist.

4. Vorrichtung nach Anspruch 2 oder 3, dadurch gekennzeichnet, daß in dem oberen Bereich des Speicherbehälters (9') ein Förderrohr (16') mündet und der Speicherbehälter (9') durch einen mit einem Sauglüfter (10') versehenen Deckel verschlossen ist.

5. Vorrichtung nach einem der Ansprüche 2-4, dadurch gekennzeichnet, daß der Zwischenbehälter (3') von einem mit dem Maschinengestell verbundenen Tragarm (4') gehalten ist, der zur Ermittlung des Füllgewichts mit mindestens einem Dehnungsmeßstreifen (5') versehen ist.

6. Vorrichtung zur Durchführung des Verfahrens nach Anspruch 1, dadurch gekennzeichnet, daß sie einen Speicherbehälter (9') umfasst, der mit einer Saugfördereinrichtung (10') zu seiner Befüllung und mit einer bodenseitigen verschließbaren Auslauföffnung (7') versehen ist.

FIG.1

EP 0 472 924 A2

FIG.2

FIG. 3